# EUROPEAN PATENT APPLICATION

(11) **EP 4 521 583 A1**
(43) Date of publication of application: **12.03.2025**
(21) Application number: 23306489.8
(22) Date of filing: 07.09.2023
(51) Int. Cl.: H02J 3/28, H01M 14/00, H02J 3/32, H02J 15/00, H01M 10/00

(54) **ENERGY STORAGE IN AQUIFERS**

(71) Applicant: TOTALENERGIES ONETECH, 92400 Courbevoie (FR)
(72) Inventor: WIBBERLEY, Christopher, 64018 PAU (FR)
(74) Representative: Plasseraud IP

(57) **Abstract**

A power plant (1) comprising two power source terminals (11, 12) connectable to a power source (S), two aquifers (A1, A2) separated from each other by an intermediate layer (M1) or a fault gouge (M2) having capillary and osmotic properties, a first electrode (13) with one end in one of the aquifers and the other end connectable to one of the two power source terminals, a second electrode (14) with one end in the other one of the aquifers and the other end connectable to the other one of the two power source terminals. Each one of the aquifers makes up a half-cell of a rechargeable battery cell composed of the two aquifers, the first and second electrodes, and the intermediate layer or the fault gouge, said intermediate layer or said fault gouge acting as a separator ion-exchange membrane between the half-cells.

## Description

### Technical field

The present invention relates to the technical field of electrical energy storage and generation. More specifically, it relates to the technical field of power plants for storing and generating electric power and methods for doing same.

### Prior art

The global economy's needs for energy continue to rise unrelentingly: population expansion, urbanization, and industrial progress all contribute to this upward trajectory. As societies seek higher living standards and technological advancements, energy consumption becomes a vital driver. However, this increasing demand places substantial pressure on energy supply systems. Traditional fossil fuel sources remain a significant part of the energy mix, but they present challenges in terms of finite availability and environmental impact. As the world's energy appetite expands, the need for efficient and reliable energy storage solutions becomes paramount to ensure a stable and resilient energy supply.

Historically, fossil fuels like coal, oil, and natural gas have been the primary energy sources, significantly driving economic growth. Yet, their combustion releases greenhouse gases and pollutants, contributing to global warming, air pollution, and adverse health effects. These environmental concerns underscore the need for cleaner energy alternatives. The transition to renewable energy sources, such as solar, wind, hydroelectric, and geothermal power, has gained traction as a means to mitigate these negative impacts and reduce carbon emissions.

Renewable energy sources offer a promising path toward sustainable energy production. Solar energy harnesses sunlight through photovoltaic panels, while wind power captures kinetic energy from moving air. Hydroelectric plants utilize flowing water to generate electricity, and geothermal energy taps into Earth's internal heat. Each type of renewable energy presents unique advantages and challenges based on geographical location, resource availability, and technological intricacies.

While renewable energy sources hold immense potential, they also present challenges related to intermittency and energy storage. Unlike fossil fuel power plants that can provide consistent energy, renewables are subject to weather fluctuations. This intermittency hinders their ability to meet constant energy demand.

In addition, the challenge of energy storage takes centre stage in the context of energy transition goal and in particular of the EU Green Deal-a comprehensive policy initiative aimed at achieving climate neutrality and promoting sustainable economic growth within the European Union. As the EU commits to significantly reducing its carbon emissions and increasing the share of renewable energy sources in its energy mix, the intermittency of renewable energy generation becomes a critical concern. Energy storage technologies are pivotal in enabling the efficient integration of variable energy sources like wind and solar into the grid, ensuring a stable and reliable energy supply. The EU Green Deal places a spotlight on advancing energy storage solutions that can store excess energy during periods of high production and release it when demand peaks. By addressing the storage challenge, the EU seeks to establish a resilient energy infrastructure that supports its ambitious sustainability goals.

Currently available energy storage technologies comprise batteries, pumped hydro storage, and thermal storage systems. Unfortunately, existing solutions for storage of intermittent renewable electricity (wind, solar) are limited, being small scale and requiring transport from factory to site.

Striking a balance between reliable energy storage and minimizing the ecological footprint remains a key challenge in fully realizing the potential of renewable energy as a sustainable power source.

### Summary of the invention

The aim of the present invention is to overcome the absence of largescale energy storage for intermittent renewable energy.

Thus, the present invention provides a power plant comprising two power source terminals connectable to a power source, two aquifers separated from each other by an intermediate layer or a fault gouge, said intermediate layer or said fault gouge having capillary and osmotic properties, a first electrode with one end in one of the aquifers and the other end connectable to one of the two power source terminals, a second electrode with one end in the other one of the aquifers and the other end connectable to the other one of the two power source terminals. Each one of the aquifers comprised in the power plant makes up a half-cell of a rechargeable battery cell composed of the two aquifers, the first and second electrodes and the intermediate layer or the fault gouge, said intermediate layer or said fault gouge acting as a separator ion-exchange membrane between the half-cells.

The two aquifers may comprise porous and permeable rocks that store and transport fluids, such as sedimentary rocks, carbonaceous rocks or fractured crystalline rocks.

The intermediate layer or the fault gouge separating the aquifers may comprise, preferably low-permeability, for example lower than 1 mD (i.e. 9.869233×10⁻¹⁶ m²), clay-rich materials, such as shales.

In case the fault gouge acts as a separator membrane between the half-cells, the two aquifers may have different rock compositions.

The aquifers may comprise water with a salinity level of at least 30 g/L.

The aquifers may be confined aquifers, disconnected from water table.

The power plant may further comprise two load terminals and a switch, the switch being configured to disconnect the other ends of the first and second electrodes from the power source terminals and connect the same to the load terminals.

The invention also provides a method for producing electric power which comprises a power storing phase which comprises connecting two aquifers which are separated from each other by an intermediate layer or a fault gouge, to a power source, thereby generating an electric current in a first direction between both aquifers to displace charges contained in one aquifer to the other aquifer.

The aquifers used in this method may comprise water with a salinity level of at least 30 g/L.

The salinity level in this method may be obtained through injecting saline water into the aquifers.

The method may further comprise a power generating phase comprising disconnecting the two aquifers from the power source and connecting the two aquifers to a load, thereby generating an electric current in a second direction opposite the first direction.

The present invention thus proposes a completely new and innovative concept: electrical energy storage in geological aquifers, i.e. geo-electric storage, through the generation and release of electrochemical potential gradients across fault or membranes between two aquifers. Either shale beds in between two aquifer layers, or shale-bearing fault gouges in geological faults separating two aquifer panels, could be used.

### Brief description of the drawings

The invention will be described hereafter in more details with reference to the illustrating and non limiting drawings, among which:
FIG. 1 schematically illustrates a first embodiment where the two aquifers are separated by an intermediate layer; and
FIG. 2 schematically illustrate a second embodiment where the two aquifers are separated by a fault gouge.

### Description of embodiments

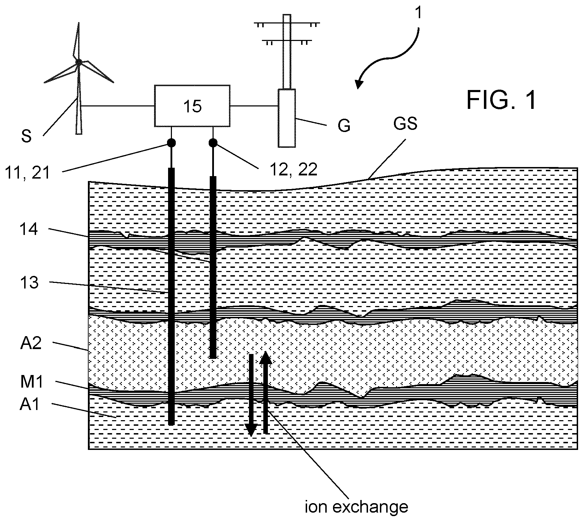

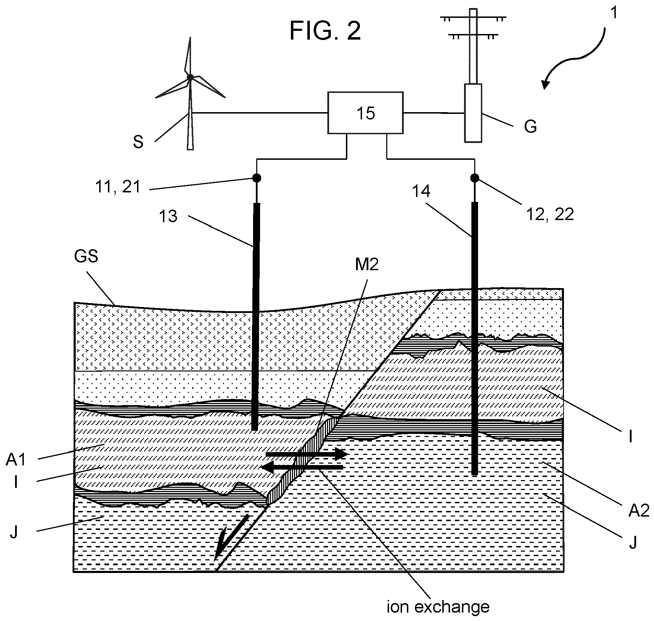

A power plant **1** according to the invention will now be described in more detail with reference to FIG. 1 and FIG. 2. Such a power plant **1** comprises two power source terminals **11, 12** connectable to a power source **S,** two aquifers **A1, A2** separated from each other by an intermediate layer **M1** or a fault gouge **M2** having capillary and osmotic properties, a first electrode **13** with one end in one of the aquifers and the other end connectable to one of the two power source terminals and a second electrode **14** with one end in the other one of the aquifers and the other end connectable to the other one of the two power source terminals.

In such configurations as represented on FIG.1 and FIG.2, each one of the aquifers **A1, A2** makes up a half-cell of a rechargeable battery cell composed of the two aquifers **A1, A2** - containing water of salinity of at least 30 g/L and acting as the electrolyte, the first and second electrodes **13, 14** and the intermediate layer **M1** or the fault gouge **M2,** said intermediate layer or said fault gouge acting as a separator membrane between the half cells. In this configuration, the battery cell is thus a geo-electric storage cell.

Aquifers are underground reservoirs of porous and permeable rocks containing water which contribute to the Earth's water cycle and support various ecosystems and human activities. These geologic formations consist of layers of porous and permeable rocks such as gravel, sand, sandstone that can store and transmit water. The spaces within the grains of these materials, known as pore spaces or voids, usually contain fluids such as freshwater or brines depending on the geographical and geological context, accumulating over extended period of time. Thus, aquifers function as natural underground storage tanks.

The movement of water within aquifers is governed by the principles of groundwater flow, driven primarily by gravity and the pressure differences between various parts of the aquifer system. Water enters the aquifer in a recharge zone, where it infiltrates the ground, filling the pore spaces and gradually moving deeper into the subsurface. The area where water is discharged from the aquifer, often through springs, rivers, or wells, is referred to as the discharge zone.

Aquifers can be located both onshore and offshore, and are categorized into two main types: unconfined and confined. Unconfined aquifers have an upper boundary known as the water table. Below the water table, the ground is saturated with water. Above the water table, the ground is not saturated. Confined aquifers, on the other hand, are bounded by impermeable or semi-impermeable layers both above and below, creating a pressurized system. When a well is drilled into a confined aquifer, the water may rise above the top of the aquifer due to the confined pressure up to the surface, forming an artesian well. For the purposes of the invention, confined aquifers are preferred.

Yet, in some cases where confined aquifers are eroded for instance, they may be in fluid communication with meteoric waters or with the water table. This input of fresh surface water could change the water salinity inside the aquifer, thus creating charge imbalances, and potentially reducing the efficiency of energy production/storage. Therefore, for the purposes of the invention, it is preferred to focus on confined aquifers with no connection to meteoric waters, or are disconnected from the water table and/or from any other aquifer with a water table.

In contrast to geological aquifer strata, impermeable or semi-impermeable layers also exist such as shales, fine-grained sedimentary rocks that form from the compaction of mud, clays, silts, and organic materials over millions of years. Shales are characterized by a laminated appearance, composed of a plurality of thin layers that give them a distinctive fissile or easily breakable nature.

The formation of shales begins with the accumulation of fine-grained sediments in environments such as quiet lakes, river deltas, deep ocean basins, and floodplains. These sediments are often composed of mineral particles like clays and silts, as well as organic debris. Over time, these materials settle at the bottom of water bodies, forming layers. As new layers accumulate on top of older ones, the weight of the overlying sediments exerts pressure on the lower layers, causing compaction.

As the sediments continue to accumulate, the water between the particles is gradually squeezed out. Minerals like clay minerals, quartz, and various silicates within the sediments may also chemically react and bond together, contributing to the consolidation process. The combination of compaction and cementation transforms the initially loose sediments into a solid rock matrix. For the purposes of the invention, the intermediate layer separating the aquifers is preferably composed of these clay-rich materials, such as shales.

A fault gouge is a specific type of geological fault rock characterized by the presence of finely pulverized or sheared clay-rich materials, often referred to as "gouge", within the fault zone. This type of fault rocks commonly occurs in sedimentary formations such as inter-bedded sandstones and shale or mudstone sequences. Fault gouges play a significant role in controlling the hydraulic and mechanical behaviour of fault zones and influencing the patterns of water and hydrocarbon migration underground, such as by creating zones of low permeability; notably below 1 mD, which act as barriers to fluid migration and can compartmentalize reservoirs.

In areas where the rocks are brittle and fractured, faults can develop as a response to tectonic stresses in the Earth's crust. When a fault develops through clay-rich or fine-grained sedimentary rock layers, the mechanical behaviour is distinct, and the rocks undergo plastic deformation, meaning they can be deformed without breaking. This results in clay-rich materials, on either side of the fault, being crushed, smeared, and mixed together. This process often leads to the formation of fault gouges, which are highly compacted, non-cohesive and thus constituted by a finely fragmented clay matrix. For the purposes of the invention, the fault gouge separating the two aquifers is preferably a shale-bearing fault gouge.

Gouge material properties have important implications for the mechanics of earthquakes and tectonics; for example, a low-permeability gouge material zone can trap transient pressurized water during an earthquake, making the coseismic fault slip easier, smoother, permitting it to run further in a way similar to a lubricant reducing friction between two surfaces.

Both intermediate layers and fault gouges separating aquifers, preferably composed of clay-rich materials and/or shales, can act as ion-exchange membranes. Indeed, field-scale osmotic behaviour and capillary trapping properties of such membranes has previously been demonstrated, whilst theoretical developments supported by data from laboratory experiments have initiated an understanding of electrokinetic properties and electrochemical diffusivity behaviour in clay-rich materials and shales. Further, understanding of faults as membranes is limited to geological field observations coupled with laboratory tests on petrophysical properties, and subsurface data on hydrocarbon capillary trapping suggest that electrochemical behaviour of shale-bearing fault gouge could be similar to shales.

The fault gouge **M2** of FIG.2 is surrounded by a succession of different sedimentary rock layers on both sides of the fault, with a first layer **I** (such as sandstones layer) of one of the aquifers, and a second layer **J** (such as mudstones/shales layer) of the other one of the aquifers. The fault gouge **M2** of FIG.2 acts as the ion-exchange membrane separating the first layer **I** and the second layer **J.**

At least one of the aquifers **A1, A2** advantageously comprises water with a salinity level of at least 30 g/L, preferably at least 35 g/L, at least 40 g/L, or at least 50 g/L.

At least one of the electrodes **13, 14** may extend from the corresponding aquifer **A1, A2** up to the ground surface **GS.** Alternatively, at least one of the electrodes **13, 14** may be completely buried underground. Alternatively still, one of the electrodes **13, 14** may extend from the corresponding aquifer **A1, A2** up to the ground surface **GS** and the other one of the electrodes **14, 13** may be completely buried underground.

The power source **S** may be configured to provide at least partially intermittent renewable power such as solar power, wind power, tidal power, etc. Thus, the power plant 1 may further comprise a solar panel or solar farm, a wind turbine or wind farm, or a tide turbine or tide farm/tidal barrage. The power plant may comprise any combination of these renewable power-generating elements, either a local self-contained power grid or one connected to a national or transnational power grid. The national or transnational power grid itself advantageously comprises a solar panel or a plurality of solar farms, a wind turbine or a wind farm, or a tide turbine or a tide farm/tidal barrage.

The power plant **1** may further comprise two load terminals **21, 22** and a switch **15.**

The two load terminals **21, 22** may be connected to a power grid **G** such as a national or transnational power grid.

The switch **15** is configured to disconnect the other ends of the first and second electrodes **13, 14** from the power source terminals **11, 12** and connect the same to the load terminals **21, 22,** thus switching from a power storing mode to a power generating mode.

Hereafter, a method for producing electric power, notably using the power plant described above. The method comprises a power storing phase comprising connecting two aquifers which are separated from each other through an intermediate layer or a fault gouge, to a power source, thereby generating an electric current in a first direction between both aquifers to displace charges contained in one aquifer to the other aquifer. In other words, during the power storing phase, an electrolysis is performed through both aquifers. The charge movement is opposite of the one that would naturally occur due to potential imbalance between both aquifers which is the form in which electric power is stored.

As mentioned above, at least one of the aquifers preferably comprises water with a salinity level of at least 30 g/L, still preferably at least 35 g/L, at least 40 g/L, or at least 50 g/L.

The water may naturally have such level of salinity, which is the preferred embodiment. However, if the water salinity does not reach such level, the method may comprise injecting saline mixture into the aquifer. Such saline mixture may comprise higher salinities to compensate for the low in-situ aquifer salinity, the final target salinity value of in-situ aquifer plus injected water being at least 30 g/L, still preferably at least 35 g/L, at least 40 g/L, or at least 50 g/L.

The method may further comprise a power generating phase comprising disconnecting the two aquifers from the power source and connecting the two aquifers to a load. By disconnecting the aquifers from the power source, the electrolysis is stopped. The electrical system formed by both aquifers will then return to their natural state. By doing so, an electric current is generated in a second direction opposite the first direction of the power storing stage. The electric current is then discharged through the loads to which the load terminals are connected.

## Claims

1. A power plant (1) comprising:
- two power source terminals (11, 12) connectable to a power source (S);
- two aquifers (A1, A2) separated from each other by an intermediate layer (M1) or a fault gouge (M2), said intermediate layer or said fault gouge having capillary and osmotic properties;
- a first electrode (13) with one end in one of the aquifers and the other end connectable to one of the two power source terminals;
- a second electrode (14) with one end in the other one of the aquifers and the other end connectable to the other one of the two power source terminals; wherein each one of the aquifers makes up a half-cell of a rechargeable battery cell composed of the two aquifers, the first and second electrodes and the intermediate layer or the fault gouge, said intermediate layer or said fault gouge acting as a separator ion-exchange membrane between the half-cells.

2. The power plant of claim 1, wherein the two aquifers comprise porous and permeable rocks that store and transport fluids, such as sedimentary rocks, carbonaceous rocks or fractured crystalline rocks.

3. The power plant of claim 1 or claim 2, wherein the intermediate layer or the fault gouge separating the aquifers comprises clay-rich materials, such as shales.

4. The power plant of any one of claims 1 to 3, wherein the fault gouge acts as a separator membrane between the half-cells, the two aquifers having different rock compositions.

5. The power plant of any one of claims 1 to 4, wherein the aquifers comprise water with a salinity level of at least 30 g/L.

6. The power plant of any one of claims 1 to 5, wherein the aquifers are confined aquifers, disconnected from water table.

7. The power plant of any one of claims 1 to 6, further comprising two load terminals (21, 22) and a switch (15), wherein the switch is configured to disconnect the other ends of the first and second electrodes from the power source terminals and connect the same to the load terminals.

8. A method for producing electric power, comprising a power storing phase which comprises connecting two aquifers which are separated from each other by an intermediate layer or a fault gouge, to a power source, thereby generating an electric current in a first direction between both aquifers to displace charges contained in one aquifer to the other aquifer.

9. The method of claim 8, wherein the aquifers comprise water with a salinity level of at least 30 g/L.

10. The method of claim 9, wherein the salinity level is obtained through injecting saline water into the aquifers.

11. The method of any one of claims 8 to 10, further comprising a power generating phase comprising disconnecting the two aquifers from the power source and connecting the two aquifers to a load, thereby generating an electric current in a second direction opposite the first direction.
